# EUROPÄISCHE PATENTSCHRIFT

(11) **EP 0 570 734 B1**
(45) Veröffentlichungstag und Bekanntmachung des Hinweises auf die Patenterteilung: **15.07.1998**
(21) Anmeldenummer: 93106875.3
(22) Anmeldetag: 28.04.1993
(51) Int. Cl.: B23Q 1/00

(54) **Drehdurchführung**
Rotatable connection
Jonction rotative

(30) Priorität: 19.05.1992 DE 4216522
(43) Veröffentlichungstag der Anmeldung: 24.11.1993
(73) Patentinhaber: Römheld GmbH, W-6312 Laubach 1 (DE)
(72) Erfinder: Freund, Karl-Heinz, D-35321 Laubach (DE)
(74) Vertreter: Bischof, Hans-Jochen, Dipl.-Ing.

(56) Entgegenhaltungen:
- DE-A- 3 018 910
- FR-A- 333 276
- GB-A- 1 029 699
- US-A- 1 855 528
- US-A- 2 540 186

## Beschreibung

Die Erfindung bezieht sich auf eine Drehdurchführung für Maschinenteile mit einem rotierenden Drehteil und einem von diesem Drehteil umgebenen feststehenden Teil, zwischen denen ein unter Druck stehendes Medium fließen kann und die mit mehreren Anschlüssen versehen sind. Der Drehteil besteht aus einer hohlen, um eine Mittelachse drehbar gelagerten Durchführungswelle und der feststehenden Teil besitzt Verbindungsbohrungen mit Anschlüssen, die mit Zuführungsbohrungen in Verbindung stehen. Die Verbraucheranschlüsse sind in dem Drehteil integriert und jeder der Verbraucheranschlüsse ist in dem Bereich der Zuführungsbohrung drehbar und in dieser Stellung durch Unterbrechung der Druckzufuhr mit den Verbindungsbohrungen ansteuerbar.

Es sind bereits Drehdurchführungen bekannt (DE 40 22 190), die aus einem rotierenden und aus einem feststehenden Teil bestehen, bei denen die Zuführung des Mediums über einen Kanal erfolgt, an dem sich eine Drehdurchführung anschließt.

Bei der wahlweisen Zuschaltung von Abgangskanälen zu einem Zuführungskanal tritt das Problem der Abdichtung auf, wenn der Zuführungskanal unter Druck steht. An der Übergangsstelle tritt eine Leckage auf, die zur Druckminderung führt. Aus diesem Grunde sind besondere Dichtmittel erforderlich, um die Leckage weitestgehend zu verhindern. Andererseits muß aber die Drehdurchführung ständig in der Lage sein, durch eine einfache Drehbewegung die gewünschte Verbindung herzustellen.

Bei modernen Werkzeugmaschinen sind in der Regel mehrere Werkzeuge gleichzeitig im Eingriff, so daß mehrere Druckverbindungen gleichzeitig aufrechterhalten werden müssen. Die Drehdurchführung ist dieserhalb mit mehreren Anschlüssen versehen, von denen jeweils nur einer in eine solche Lage gebracht werden kann, in der das angeschlossene Werkzeug drucklos gemacht werden kann, z.B. zum Werkzeugwechsel. Bei jeder Drehung wird die Drehdurchführung jedoch an allen Verbindungen vorbeigeführt, so daß hohe Anforderungen an die Dichtheit des Systems bestehen.

Aus der Schrift US - A 2.540.186 die als nächstliegender Strand der Technik angesehen wird, ist eine Vorrichtung mit einer Drehdurchführung für Maschinenteile bekannt, die mit einem rotierenden und einem feststehenden Teil arbeitet und die mit einer hohlen, um eine Mittelachse drehbar gelagerten, Durchführungswelle mit mehreren Zu- und Abgängen versehen ist. Die Verbindungsbohrungen in dem feststehenden Teil sind mit Anschlüssen für die Verbraucher und mit Zuführungen versehen. Durch Verdrehen des Drehteils werden die Verbraucher den einzelnen Zuführungsbohrungen zugeordnet. Jede dieser Verbindungen zwischen dem feststehenden Teil mit seinen Zuführungen und dem Drehteil mit den Abgängen ist mit einer eigenen Dichtung versehen. Innerhalb der Arbeitsebene sind die Verbraucher ihren jeweiligen Anschlüsse zuführbar, damit wird mit jeder Drehung jeder Verbraucher von einem Anschluß zum anderen geführt, womit eine hohe Anforderung an die Dichtungen besteht.

Es ist Aufgabe der Erfindung einmal die Wandung der Zuführungsbohrungen und zum anderen die Innenwand des Drehteiles und die Aussenwand des feststehenden Teiles so abzudichten, daß an diesen Übergangsstellen jede Leckage ausgeschlossen ist. Die hierfür vorgesehenen Stopfen, die bei Querbewegungen leicht zu Verschiebungen neigen, sind so von der anderen Seite her zu unterstützen, daß mit zunehmendem Druck auf die Wandung auch der Druck auf die Abdichtungselemente zunimmt.

Die erfinderische Lösung dieser Aufgabe ist dem kennzeichnenden Merkmal des Anspruches zu entnehmen.

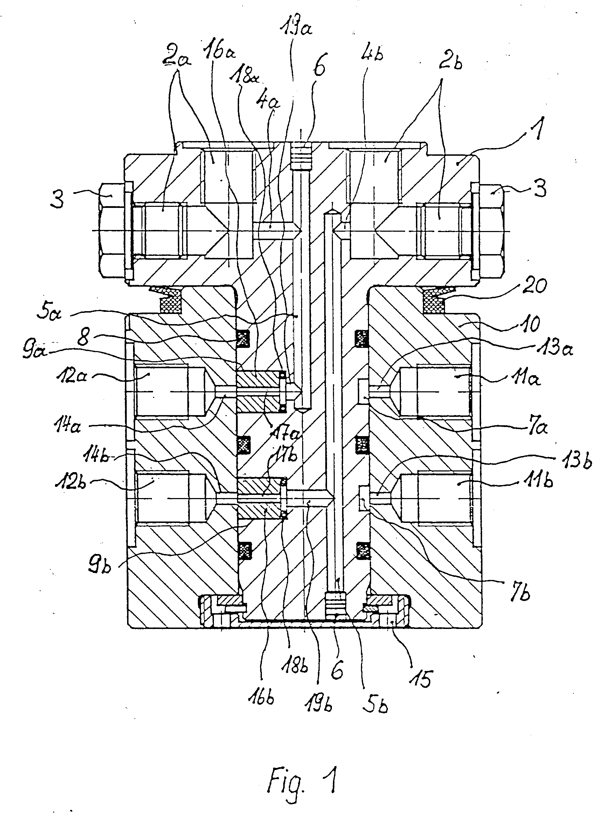

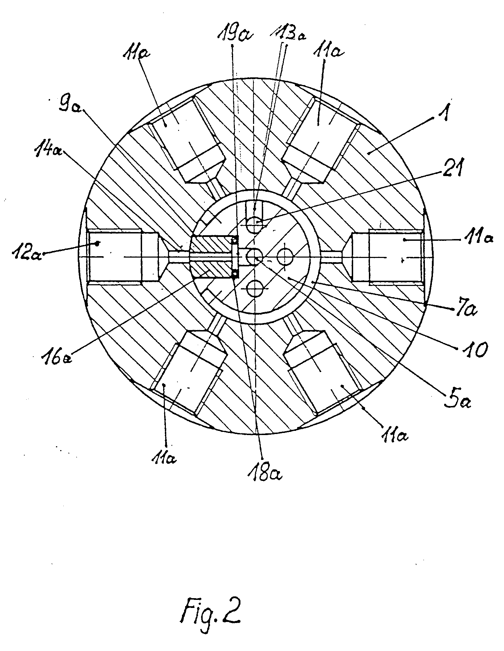

In den Zeichnungsbeispielen ist die Durchführung im einzelnen näher dargestellt. Figur 1 zeigt einen Längsquerschnitt durch die Drehdurchführung und Figur 2 zeigt einen Horizontalquerschnitt durch die Drehführung im Bereich der Anschlüsse in der Ebene a.

Die Drehdurchführung besteht aus einem feststehenden Teil 1 und einem drehbar gelagerten Drehteil 10. In dem Teil 1 sind Anschlüsse 2a, 2b vorgesehen, die sowohl vertikal als auch horizontal angeordnet sein können und die dazu dienen, das Druckmedium zuzuführen. Für jede Ebene, hier a, b, ist eine gesonderte Zuführung notwendig. Die jeweils gerade nicht benötigte Zuführung wird mit einem Schraubverschluß 3 abgedichtet. Von diesen Zuführungen gehen Zuführungsbohrungen 4a, b, die ihrerseits mit je einer Verbindungsbohrung 5a, b in Verbindung stehen. Die Verbindungsbohrungen 5a, b sind am Ende jeweils mit einer Endabdichtung 6 versehen. Ansonsten handelt es sich bei diesen Verbindungsbohrungen um Sackbohrungen innerhalb des Gehäuseteiles 1. Im Gehäuseteil 1 befinden sich zwei Ringkanäle 7a, b, die ständig mit dem Druckmedium in Verbindung stehen. Um die Ringkanäle möglichst dicht abzuschließen, sind zwischen dem stehenden Teil 1 und dem drehenden Teil 10 Dichtungen 8 ringförmig angeordnet.

Das drehende Teil 10 besitzt jetzt die einzelnen Verbraucheranschlüsse 11a, b und die Verbraucheranschlüsse 12a, b. Diese Verbraucheranschlüsse 11 und 12 sind mit einem Innengewinde versehen, so daß hier Verbindungsleitungen zu den Maschinen oder Werkzeugen anschließbar sind. Die Verbraucheranschlüsse 11, 12 unterscheiden sich dadurch, daß alle Verbraucheranschlüsse 11 in der jeweiligen Ebene a bzw. b ständig mit dem Ringkanal 7 in Verbindung stehen und damit ständig unter Druck des Mediums stehen. Diese Verbindung wird hergestellt über die Anschlußbohrungen 13a, b. Die Verbraucheranschlüsse 12a, b dagegen stehen nicht mit dem Ringkanal in Verbindung. Für diese Anschlüsse wird die Verbindung mit dem Druckmittel über die Verbindungsbohrungen 5a, b hergestellt. Der Eingriff erfolgt zunächst über die Zuführungsbohrung 19a, b und dann über die Durchgangsbohrung 17a, b. Diese beiden Bohrungen sind noch Bestandteil des feststehenden Gehäuses 1. Im Drehteil 10 sind Anschlußbohrungen 14a, b vorgesehen, über die das Druckmittel in den Verbraucheranschluß 12 gelangt.

Im Bereich dieser Zuführung muß die Drehdurchführung abgedichtet sein. Hierzu dient ein Stopfen 16a, b in Verbindung mit einem O-Ring 18a, b. Diesem Stopfen 16 ist ein Dichtelement 9a, b zugeordnet, mit dessen Hilfe eine Dichtheit zwischen der Innenwand des Drehteils und der Außenwand des feststehenden Teiles im Bereich der Durchführung erzielt wird.

Der Drehteil 10 ist gegenüber dem feststehenden Gehäuse 1 durch eine Abdichtung 20 isoliert. Über die Leitung 21 erfolgt die ständige Medienzufuhr für den Ringkanal. Beide Gehäuseteile 1 und 10 sind durch einen Abschlußdeckel 15 verschlossen.

Die Wirkungsweise der Drehdurchführung ist folgende:
In jeder der Ebenen a und b steht in den jeweiligen Ringkanal 7a bzw. 7b das Druckmittel an. Damit sind alle Verbraucheranschlüsse 11a bzw. 11b unter Druck gesetzt. Die Anschlüsse 2a, b dagegen sind so ausgelegt, daß das Druckmittel immer nur in einem dieser Anschlüsse zur Verfügung steht, also entweder in 2a oder in 2b. Damit ist auch nur immer eine Ebene a oder b schaltbar. Statt der hier gezeichneten zwei Ebenen a, b können selbstverständlich auch mehrere Ebenen vorhanden sein. Die Beaufschlagung der Anschlüsse 2a und 2b erfolgt über einzeln wirkende Zylinder oder über doppelt wirkende Zylinder, die hier nicht weiter dargestellt, sind. Soll ein Werkzeug gewechselt werden, so wird sein zugehöriger Verbraucheranschluß 11 durch entsprechende Drehung des Drehteiles in die Position 12 gebracht. Bezieht sich dieses auf Position 12a, so wird die Verbindungsbobrung 5a über 2a drucklos gemacht, so daß das an 12a angeschlossene Werkzeug gewechselt werden kann. Gleichzeitig bleibt aber in der Ebene b der Druck über Verbindungsbohrung 5b aufrechterhalten, so daß dieses Werkzeug weiterhin arbeitsfähig ist. Da hiervon der Ringkanal 7a, b unberührt ist, bleibt der Druck für alle übrigen Anschlußstellen erhalten. Nach dem Wechsel des Werkzeuges wird wieder Druck auf die Leitung 5a über 2a gegeben, und damit steht der Arbeitsdruck wieder zur Verfügung.

## Patentansprüche

1. Drehdurchführung für Maschinenteile mit einem rotierenden Drehteil (10) und einem von dem Drehteil (10) umgegebenen, feststehenden Teil (1), zwischen denen ein unter Druck stehendes Medium fliessen kann, und die mit mehreren Anschlüssen (2, 11, 12) versehen ist, wobei der Drehte (10) aus einer hohlen, um eine Mittelachse drehbar gelagerten Durchführungswelle besteht, der feststehende Teil (1) Verbindungsbohrungen (5) mit Anschlüssen besitzt, die mit Zuführungsbohrungen (4, 19) in Verbindung stehen, in dem Drehte (10) Verbraucheranschlüsse (11, 12) integriert sind, jeder der Verbraucheranschüsse (11, 12) in den Bereich einer Zuführungsbohrung (19) drehbar ist und in dieser Stellung durch Unterbrechung der Druckzuführ auf den Verbindungsbohrungen (5) ansteuerbar ist, und dem feststehenden Teil (1) Verbraucheranschlüsse (11, 12) in zwei oder mehreren Ebenen (a, b) zugeordnet sind, von denen die einen Verbraucheranschlüsse (12a, 12b) jeder Ebene über die Zuführungsbohrung (19) an jeweils eine der Verbindungsbohrungen (5) anschließbar ist, während die anderen Verbraucheranschlüsse (11a, 11b) jeder Ebene mit einem im feststehenden Teil (1) in jeder Ebene (a, b) angeordneten Ringkanal (7a, 7b), durch den ständig ein Druckmittel fliessen kann, in Verbindung stehen,
dadurch gekennzeichnet, daß in jeder Ebene zur Abdichtung der Aussenwand des feststehenden Teiles (1) und der Innenwand des Drehteiles (10) zwischen der Zuführungsbohrung (19) im feststehenden Teil (1) und einer Anschlußbohrung (14) im Drehteil (10) ein mit einer Durchgangsbohrung (17) versehener Stopfen (16) angeordnet ist, der im Bereich der Zuführungsbohrung (19) mit einem O-Ring (18) versehen ist, der stirnseitig an der Wandung des Teiles (1) anliegt und daß dem Stopfen (16) ein Dichtelement (9) zugeordnet ist, so daß die Innenwand des Drehteiles (10) und die Aussenwand des feststehenden Teiles (1) gegeneinander abgedichtet sind.

## Claims

1. Rotatable connector for machine elements, including a turning rotatable part (10) and a stationary part (1) surrounded by said rotatable part, which parts permit the flow of a pressurised medium therebetween and which are provided with several connectors (2, 11, 12), wherein said rotatable part (10) consists of a hollow penetrating shaft supported for rotation about a centre axis whilst said stationary part (1) is provided with connecting bores (5) with ports in communication with feeder passages (4, 19), wherein service pipes (11, 12) are integrated into said rotatable part (10), and each of said service pipes (11, 12) is rotatable in the area of a feeder passage (19) and adapted to be controlled in this position by interruption of the pressure supply at said connecting bores (5), and wherein service ports (11, 12) are associated with said stationary part (1) in two or more planes (a, b), whereof the first service ports (12a, 12b) of each plane are adapted for connection via said feeder passage (19) to a respective one of said connecting bores (5) whereas the other service ports (11a, 11b) of each plane communicate with a ring passage (7a, 7b) disposed in said stationary part (1) of each plane (a, b) for permanent flow of a pressurised medium therethrough,
**characterised in** that in each plane a stopper (16), including a penetrating passage (17), is disposed in each plane for sealing the outside wall of said stationary part (1) and the inside wall of said rotatable part (10) between said feeder passage (10) in said stationary part (1) and a connecting bore (14) in said rotatable part (10), which stopper is provided with an O-ring (18) in the area of said feeder passage (19), which ring bears against the wall of said part (1) at the face and, and that a sealing element (9) is associated with said stopper (16) so as to seal the inside wall of said rotatable part (10) and the outside wall of said stationary part (1) from each other.

## Revendications

1. Jonction rotative pour organes de machine, comprenant une partie rotative tournante (10) et une partie fixe (1) entourée par ladite partie rotative (10), lesquelles parties permettent l'écoulement d'un milieu comprimé y entre et sont pourvues de plusieurs raccords (2, 11, 12), dans laquelle ladite partie rotative (10) consiste en un arbre creux de traversée logé à pivoter autour d'un axe central, pendant que ladite partie fixe (1) comprend des alésages de jonction (5) à raccords en communication avec des alésages d'amenée (4, 19), et dans laquelle des raccords récepteurs (11, 12) sont intégrés dans ladite partie rotative (10), et chacun desdits raccords récepteurs (11, 12) est rotatif dans la zone d'un alésage d'amenée (19) et peut être commandé, en cette position, par interruption de l'amenée de pression auxdits alésages de raccord (5), et dans laquelle des raccords récepteurs (11, 12) dans deux ou plus plans (a, b) sont affectés à ladite partie fixe (1), dont les premiers raccords récepteurs (12a, 12b) de chaque plan sont prévus à être raccordés à un desdits alésages de jonction respectifs (5), pendant que les autres raccords récepteurs (11a, 11b) de chaque plan se trouvent en communication avec un conduit de ceinture (7a, 7b) disposé en chaque plan (a, b) dans ladite partie fixe (1) afin de permettre l'écoulement permanent d'un milieu sous pression,
**caractérisée en ce** que sur chaque plan un bouchon (16), qui est prévu d'un l'alésage de traversée (17), est disposé afin d'établir l'étanchéité de la paroi extérieure de ladite partie fixe (1) et la paroi intérieure de ladite partie rotative (10) entre ledit alésage d'amenée (19) dans ladite partie fixe (1) et un alésage de raccord (14) dans ladite partie rotative (10), lequel bouchon est muni d'un joint torique d'étanchéité (18) dans la zone dudit alésage d'amenée (19), qui porte contre la paroi de ladite partie (1) du côté de la face, et en ce qu'un élément d'étanchéité (9) est affecté audit bouchon (16) de façon que la paroi intérieure de ladite partie rotative (10) et la paroi extérieure de ladite partie fixe (1) soient isolées l'une de l'autre.
